# EUROPÄISCHE PATENTSCHRIFT

(11) **EP 0 620 040 B1**
(45) Veröffentlichungstag und Bekanntmachung des Hinweises auf die Patenterteilung: **26.02.1997**
(21) Anmeldenummer: 94250068.7
(22) Anmeldetag: 17.03.1994
(51) Int. Cl.: B01J 8/02, B01D 1/00, G01N 1/00

(54) **Katalytischer Reaktor**
Catalytic reactor
Réacteur catalytique

(30) Priorität: 08.04.1993 DE 4312100
(43) Veröffentlichungstag der Anmeldung: 19.10.1994
(73) Patentinhaber: MANNESMANN Aktiengesellschaft, 40213 Düsseldorf (DE)
(72) Erfinder: Rumpf, Günter, D-61276 Weilrod (DE); Schlau, Peter, D-60320 Frankfurt (DE)
(74) Vertreter: Presting, Hans-Joachim, Dipl.-Ing.

(56) Entgegenhaltungen:
- DE-A- 1 912 526
- FR-A- 1 327 210
- PATENT ABSTRACTS OF JAPAN vol. 09, no. 88 (C-276) (1811) 17. April 1985 & JP-A-59 222 225 (KOBE SEIKOSHO) 13. Dezember 1984

## Beschreibung

Die Erfindung betrifft einen katalytischen Reaktor in welchen flüssige Medien kontinuierlich einbring-, verdampf- und katalytischen Reaktionen zuführbar sind, wobei der Reaktorraum aus einem einseitig offenen rohrförmigen Reaktormantel gebildet wird, welcher mit einem eine Durchlassöffnung aufweisenden Reaktordeckel verschließbar ist, und vom Bereich der Durchlassäffnung bis tief in den Reaktorraum hineinreichend ein als Verdampferstufe wirkendes Rohr angeordnet ist, welches an dem in den Reaktorraum hineinreichenden Ende mit einer Prallplatte und einer Prallplattenhaltevorrichtung versehen ist und der verbleibende Reaktorraum unter Bildung einer Katalysestufe zumindest teilweise mit Katalysator gefüllt ist.

Katalytische Reaktoren der gattungsgemäßen Art werden vielfach im Bereich der Analysetechnik eingesetzt. In den Reaktor werden flüssige Medien eingebracht, die beisoielsweise als Träger für solche Stoffe dienen, die mit oder ohne das mitverdampfte flüssige Medium einer katalytischen Reaktion zugeführt werden sollen.

Solche katalytischen Reaktoren können auch vielfach zur Analyse bzw. Dissoziation von gelösten Stoffen dienen. Dabei wird das flüssige Medium mitsamt der darin gelösten Inhaltsstoffe sprunghaft verdampft, indem es durch ein in den Reaktorraum hineingeführtes Rohr auf eine Prallplatte tropft, welche auf eine Temeratur von einigen hundert bis hin zu über tausend Grad vorgeheizt ist. Das sprunghaft verdampfte Medium tritt dabei im Bereich der Prallplattenhaltevorrichtung aus dem Rohr aus und wird dann dem Katalysator zugeführt. Um einen ungestörten Phasenübergang von aer flüssigen zur dampfförmigen Phase aufrechtzuerhalten und das nunmehr dampfförmige Medium möglichst gleichverteilt dem Katalysator zuzuführen ist es ebenfalls bekannt, daß man das Rohr im Bereich der Prallplatte bzw. Prallplattenhaltevorrichtung in ein becherförmiges Siebelement einmünden läßt, welches mit einem Siebdeckel verschlossen ist. In diesem Raum kann sich das nunmehr verdampfte Medium entsprechend auch sprunghaft ausdehnen, um anschließend durch den Siebdeckel hindurch in die Katalysezone einzudiffundieren. Der verbleibende Reaktorraum ist somit zumindest teilweise mit dem Katalysator gefüllt, durch das das verdampfte Medium hindurchdiffundiert oder möglicherweise auch unter Einbringung eines Druckgradienten entlang der Katalysestrecke "hindurchgesaugt" wird. Der Ausgang der Katalysestrecke mündet durch eine entsprechende Öffnung mit Haltering und durch eine weitere Öffnung im Reaktordeckel nach außen.

Der Aufbau des Reaktors ist in bekannter Ausführung zumindest teilweise, daß heißt in wesentlichen Bereichen des Reaktormantels aus Keramischem Werkstoff bestehend. Die Prallplattenhaltevorrichtung ist an das Rohr angebracht und besteht üblicherweise aus metallischem Werkstoff.

Nachteilig ist hierbei, daß die Verwendung unterschiedlicher Werkstoffe gerade im Bereich der Zone, in der die sprunghafte Verdampfung stattfindet, Verspannungen mechanischer Art herbeiführt, was die Reaktorstandzeit erheblich verkürzt. Zudem ist die mechanische Verbindung von metallischen und keramischen Teilen miteinander fertigungstechnisch ungünstig und aufwendig.

Ausgehend von einem katalytischen Reaktor der bekannten Art liegt der Erfindung die Aufgabe zugrunde, einen solchen katalytischen Reaktor in allen Zonen wärmestabil, verspannungsfrei und insgesamt einfach herstellbar zu gestalten.

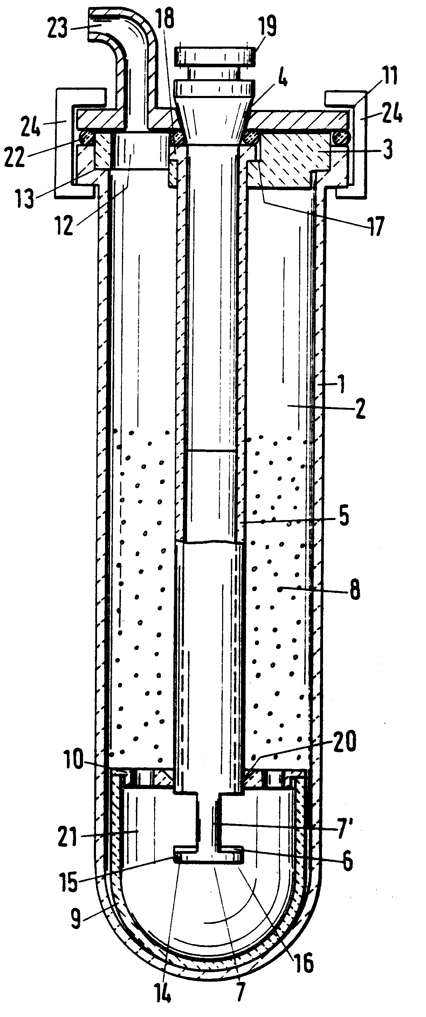

Die gestellte Rufgabe wird bei einem katalytischen Reaktor der gattungsgemäßen Art erfindungsgemäß dadurch gelöst, daß auch das Rohr, die Prallplatte und die Prallplattenhaltevorrichtung aus keramischem Werkstoff bestehen und daß das Rohr und die Prallplattenhaltevorrichtung einstückig ausgebildet sind. Hierdurch ergibt sich der Vorteil, das Rohr und Prallplattenhaltevorrichtung nicht mehr montiert werden müssen. Die Tatsache, die Prallplatte aus keramischem Werstoff zu bilden führt dazu, daß diese bei Temperaturänderungen verspannungsfrei in der ebenfalls keramischen Prallplattenhaltevorrichtung einliegt. Weitere vorteilhafte Ausgestaltungen sind in den nachfolgenden Ansprüchen angegeben. Ein weiteres sehr wesentliches Ausgestalungselement der Erfindung ist, daß der Haltering unter Teilformschlußbildung unterhalb des Reaktordeckels einlegbar ist und das Rohr entsprechend fixiert, wobei der Haltering dabei auch aus keramischem Werkstoff besteht. Die gesamte Anordnung ist damit thermomechanisch sehr stabil was zu einer erheblichen Erhöhung der Reaktorstandzeit führt. Die Erfindung ist in der Zeichnung dargestellt und im Nachfolgenden näher beschrieben.

Die Zeichnung zeigt einen Querschnitt durch den gesamten katalytischen Reaktor. Der Reaktor selbst besteht aus einem Reaktormantel 1 mit einem offenen Ende der über einen Reaktordeckel 11 verschließbar ist, und einem geschlossenen bodenseitigen Ende. Der Reaktormantel 1 umschließt bzw. bildet einen Reaktorraum 2. In den Reaktorraum hinein ragt im montierten Zustand ein Rohr 5, welches am reaktordeckelseitigen Ende über einen Haltering 3 gehalten ist. Nach Auflegen und Sichern des Reaktordeckels 11 werden Rohr 5 sowie Haltering 3 fixiert bzw. formschlüssig gehalten. Fixiert wird dabei der Reaktordeckel über Klammerelemente 24. Bei Unterbringung des Reaktors in einem Ofen kann jedoch vorgesehen werden, daß der Reaktor über innerhalb des Ofens angeordnete Halteelemente gehalten ist, wobei dann gleichzeitig die Halteelemente auch den Reaktordeckel umgreifen. Wichtig dabei ist generell, daß die Dichtungen 22 in ihrer Sollage gehalten und angedrückt werden, so daß zum einen die notwendige Dichtigkeit gewährleistet, und zum anderen auch gewährleistet ist, daß die Ansätze 18 des Rohres 19 formschlüssig in Stufe 17 gedrückt werden und somit das Rohr fixiert gehalten wird. Der Reaktordeckel weist eine Durchgangsöffnung 4 auf, durch die das Rohr hindurchreicht. Um nach Montage des Reaktors diese Fixierung zu gewährleisten, ist der Reaktormantel 1 am offenen Ende mit einer umlaufenden Stufe 13 versehen, in die der Haltering 3 einlegbar ist. Der Haltering 3 selbst weist zur Aufnahme und Fixierung des Rohres 5 eine Öffnung auf, durch die das Rohr 5 hindurchreicht wobei die Öffnung mit einer Stufe 17 versehen ist. Das Rohr 5 weist dann am entsprechenden im Haltering 3 gehaltenen Ende einen kragenförmigen Rohransatz 18 auf, welcher in der Stufe 17 des Halteringes 3 einliegt. über Dichtungsringe 22 wird die gesamte Anordnung nach Auflegen des Reaktordeckels 11 fixiert, so daß das Rohr 5 in einer bezüglich auf den Reaktorquerschnitt mittig bezogenen Position fixiert ist. Aus der Längsschnittdarstellung mit Längsachse geht hervor, daß die Stufe 13 sowie der Rohransatz 18 und die Stufe 17 umlaufend bzw. rotationssymetrisch sind. Das Rohr 5 weist an dem im montierten Zustand außerhalb des Reaktors befindlichen Ende einen Rohranschluß 19 auf. Innerhalb des Reaktors ist am geschlossenen Ende, daß heißt am Boden, ein becherförmiges Element 9 angeordnet, welches über eine Lochplatte 10 abgedeckt ist. Diese Lochplatte weist in zentrischer Position eine Öffnung 20 auf, durch welches das Rohr 5 in den vom becherförmigen Element 9 gebildeten Verdampferraum 21 hineinreicht. Im Bereich des offenen Rohrendes ist eine Prallplatte 6 vorgesehen, die von einer Prallplattenhaltevorrichtung 7 in geeigneter Entfernung zum offenen Rohrende gehalten ist. Diese Prallplattenhaltevorrichtung 7 hält die Prallplatte 6 in einer derartigen Position zum Rohrende, daß die dem Rohrende zugewandte Prallplattenoberfläche parallel zum Rohrquerschnitt ausgerichtet ist. Die Prallplattenhaltevorrichtung 7 hält die Prallplatte 6 über Stege 7' in der besagten geeigneten Entfernung zum offenen Rohrende. Dieser Abschnitt des Reaktors im Bereich des becherförmigen Elementes 9 ist dabei die sogenannte Verdampferstufe. Diese Verdampferstufe wird - wie oben bereits erwähnt - von der Lochplatte 10 abgedeckt. Die Lochplatte 10 ist mit einer Vielzahl von Löchern versehen, die das dampfförmige Medium in den übrigen Reaktorraum 2 eintreten lassen; die Löcher sind jedoch so klein, daß der Katalysator 8, welcher in der Regel aus einem Granulat oder aus Kugeln besteht, nicht in den Verdampferraum 21 eindringt. Der übrige Reaktorraum 2 bildet somit die sogenannte Katalysestufe, die zumindest teilweise mit dem Katalysator 8 gefüllt ist. Im Bereich der Prallplattenhaltevorrichtung 7, daß heißt genauer im Bereich der Prallplatte 6 ist ein Träger 15 vorgesehen, welcher ringförmig ausgebildet ist und die Prallplattenhaltevorrichtung 7 in diesem Bereich auch ringförmig umgreift. Innerhalb des Trägers 15 ist eine Heizung 14 angeordnet, über welche die Prallplatte auf die geeignete Verdampfungstemperatur gebracht werden kann.Zwischen Träger 15 und Prallplattenhaltevorrichtung 7 ist ein Temperatursensor 16 angeordnet, über welche die Temperatur der Prallplatte überwacht und geregelt werden kann.

Zur Funktionsweise läßt sich folgenoes sagen.
Über den Rohranschluß 19 wird das flüssige Medium in den Reaktor eingebracht und tropft durch das Rohr 5 in die Verdampferstufe des Reaktors. Dabei tropft das flüssige Medium auf die heiße Prallplatte und verdampft in den entsprechenden Verdampferraum 20 des becherförmigen Elementes 9 hinein. Durch die Lochplatte 10 tritt nun das verdampfte Medium in die Katalysestufe 8 ein, durch welche es hindurchdiffundiert und beispielsweise über die Durchgangsöffnung 12 des Halteringes 3 und über den Rohransatz im Reaktordeckel 11 wieder abführbar ist. Hierbei besteht das Rohr 5, die Prallplatte 6 und Prallplattenhaltevorrichtung 7 aus einem keramischen Werkstoff, und das Rohr 5 sowie die Prallplattenhaltevorrichtung 7 sind einstückig ausgebildet. Zweckmäßigerweise besteht dann aucn der Haltering 3 sowie das becherförmige Element 9 und die Lochplatte 10 aus keramischem Werkstoff. Damit ist die gesamte Reaktoranordnung in allen Zonen wärmestabil, verspannungsfrei und insgesamt extrem einfach herstellbar.

## Patentansprüche

1. Katalytischer Reaktor in welchen flüssige Medien kontinuierlich einbring-, verdampf- und katalytischen Reaktionen zuführbar sind, wobei der Reaktorraum durch einen einseitig offenen, rohrförmigen Reaktormantel (1) gebildet wird, welcher mit einem eine Durchlassöffnung aufweisenden Reaktordeckel (11) verschließbar ist, und vom Bereich der Durchlassöffnung (4) bis tief in den Reaktorraum (2) hineinreichend ein als Verdampferstufe wirkendes Rohr (5) angeordnet ist, welches an dem in den Reaktorraum (2) hineinreichenden Ende mit einer Prallplatte (6) und einer Prallplattenhaltevorrichtung (7) versehen ist und der verbleibende Reaktorraum (2) unter Bildung einer Katalysestufe zumindest teilweise mit Katalysator (8) gefüllt ist,
dadurch gekennzeichnet,
daß das Rohr (5), die Prallplatte (6) und die Prallplattenhaltevorrichtung (7) aus keramischem Werkstoff bestehen, und daß das Rohr (5) und die Prallplattenhaltevorrichtung (7) einstückig ausgebildet sind.

2. Katalytischer Reaktor nach Anspruch 1
dadurch gekennzeichnet,
daß am Boden des Reaktors ein becherförmiges Element (9) angeordnet ist, in welches das Rohr (5) im Bereich der Prallplattenhaltevorrichtung (7) hineinragt und das mit einer Lochplatte (10) abgedeckt ist.

3. Katalytischer Reaktor nach Anspruch 2,
dadurch gekennzeichnet, daß
das becherförmige Element (9) sowie die Lochplatte (10) aus keramischem Werkstoff bestehen.

4. Katalytischer Reaktor nach einem oder mehreren der vorhergehenden Ansprüche,
dadurch gekennzeichnet,
daß der Reaktordeckel (11) aus Glas besteht.

5. Katalytischer Reaktor nach einem oder mehreren der vorhergehenden Ansprüche,
dadurch gekennzeichnet,
daß das Rohr (5) unterhalb des Reaktordeckels (11) über einen teilformschlüssig einlegbaren Haltering (3) nach Verschließen des Reaktors mit dem Reaktordeckel (11) im Reaktor fixiert ist.

6. Katalytischer Reaktor nach Anspruch 5,
dadurch gekennzeichnet,
daß der Haltering (3) derart ausgebildet ist, das derselbe in eine umlaufende Stufe (13) am offenen Ende des Reaktormantels (1) einlegbar ist und das Rohr (5), bezogen auf den Reaktorquerschnitt mittig fixiert ist.

7. Katalytischer Reaktor nach Anspruch 6,
dadurch gekennzeichnet,
daß der Haltering (3) als unter den Reaktordeckel (11) einlegbarer Zwischendeckel ausgebildet ist, welcher im Bereich zwischen dem im montierten Zustand fixierten Rohr (5) und dem Reaktormantel (1) Durchgangsöffnungen (12) aufweist, durch welche der Reaktor vor Auflegen des Reaktordeckels (11) mit Katalysator (8) befüllbar ist.

8. Katalytischer Reaktor nach einem oder mehreren der vorhergehenden Ansprüche,
dadurch gekennzeichnet,
daß an der Prallplattenhaltevorrichtung (5) eine resistive Heizung (14) angeordnet ist, und die dazugehörigen elektrischen Leitungen im Bereich des Rohres (5) aus dem Reaktor herausgeführt sind.

9. Katalytischer Reaktor nach Anspruch 8,
dadurch gekennzeichnet,
daß die Heizung (14) in einem Träger (15) angeordnet ist, welcher ringförmig ausgeoildet und die Prallplattenhaltevorrichtung (7) ringförmig umgreifend mit derselben verbindar ist.

10. Katalytischer Reaktor nach Anspruch 9,
dadurch gekennzeichnet,
daß zwischen Prallplattenhaltevorrichtung (7) und Träger (15) ein Temperatursensor (16) angeordnet ist.

## Claims

1. A catalytic reactor in which liquid media can be continuously introduced, evaporated and sent to catalytic reactions, wherein the reactor space is formed by a tubular reactor casing (1) open on one side which can be closed by a reactor cover (11) having a passage opening, and a pipe (5) which acts as an evaporator stage being provided extending from the region of the passage opening (4) to deep into the reactor space (2), which pipe at the end extending into the reactor space (2) is provided with a baffle plate (6) and a baffle-plate holding device (7) and the remaining reactor space (2) is at least partly filled with catalyst (8), forming a catalyst stage,
characterised in that
the pipe (5), the baffle plate (6) and the baffle-plate holding device (7) are made of ceramic material, and that the pipe (5) and the baffle-plate holding device (7) are made integral.

2. A catalytic reactor according to Claim 1, characterised in that a cup-shaped element (9) is arranged on the base of the reactor, into which element the pipe (5) projects in the region of the baffle-plate holding device (7) and which is covered by a perforated plate (10).

3. A catalytic reactor according to Claim 2, characterised in that the cup-shaped element (9) and the perforated plate (10) are made of ceramic material.

4. A catalytic reactor according to one or more of the preceding claims, characterised in that the reactor cover (11) is made of glass.

5. A catalytic reactor according to one or more of the preceding claims, characterised in that the pipe (5) is fixed in the reactor beneath the reactor cover (11) via a partially positively insertable holding ring (3) after closure of the reactor with the reactor cover (11).

6. A catalytic reactor according to Claim 5, characterised in that the holding ring (3) is constructed such that it can be inserted into a circumambient step (13) at the open end of the reactor casing (1) and the pipe (5) is fixed centrally, relative to the reactor cross-section.

7. A catalytic reactor according to Claim 6, characterised in that the holding ring (3) is designed as an intermediate cover insertable beneath the reactor cover (11), which in the region between the pipe (5) which is fixed in the mounted state and the reactor casing (1) has through openings (12) through which the reactor can be filled with catalyst (8) before the reactor cover (11) is placed on.

8. A catalytic reactor according to one or more of the preceding claims, characterised in that a resistive heating means (14) is provided on the baffle-plate holding device (7), and the associated electric lines are passed out of the reactor in the region of the pipe (5).

9. A catalytic reactor according to Claim 8, characterised in that the heating means (14) is arranged in a support (15) which is annular and can be connected to the baffle-plate holding device (7), surrounding it in annular manner.

10. A catalytic reactor according to Claim 9, characterised in that a temperature sensor (16) is arranged between the baffle-plate holding device (7) and support (15).

## Revendications

1. Réacteur catalytique, dans lequel des liquides peuvent être amenés en continu à des réactions d'entrée, d'évaporation et catalytiques, l'espace de réacteur étant formé par une enveloppe de réacteur (1) ouverte d'un côté, en forme de tube et pouvant être fermée par un couvercle de réacteur (11) présentant une ouverture de passage, et un tube (5) agissant comme étage d'évaporateur est agencé de la zone de l'ouverture de passage (4) jusque profondément dans l'espace de réacteur (2), tube qui est muni à l'extrémité faisant saillie dans l'espace de réacteur (2) d'une plaque de rebond (6) et d'un dispositif (7) de maintien de plaque de rebond, et l'espace de réacteur (2) restant est rempli au moins partiellement d'un catalyseur (8) en formant un étage de catalyse,
caractérisé ce que le tube (5), la plaque de rebond (6) et le dispositif (7) de maintien de plaque de rebond sont réalisés en matériau céramique, et en ce que le tube (5) et le dispositif (7) de maintien de plaque de rebond sont réalisés en une seule pièce.

2. Réacteur catalytique selon la revendication 1,
caractérisé en ce qu'un élément (9) en forme de godet est agencé dans le fond du réacteur, dans lequel élément fait saillie le tube (5) dans la zone du dispositif (7) de maintien de plaque de rebond, et qui est recouvert par une plaque à trou (10).

3. Réacteur catalytique selon la revendication 2,
caractérisé en ce que l'élément (9) en forme de godet, ainsi que la plaque à trou (10), sont réalisés en matériau céramique.

4. Réacteur catalytique selon l'une ou plusieurs des revendications précédentes,
caractérisé en ce que le couvercle de réacteur (11) est réalisé en verre.

5. Réacteur catalytique selon l'une ou plusieurs des revendications précédentes,
caractérisé en ce que le tube (5) est fixé dans le réacteur, au-dessous du couvercle de réacteur (11), par l'intermédiaire d'une bague de maintien (3) pouvant être introduite partiellement de façon clabotée, après fermeture du réacteur avec le couvercle de réacteur (11).

6. Réacteur catalytique selon la revendication 5,
caractérisé en ce que la bague de maintien (3) est réalisée de sorte que celle-ci peut être introduite dans un étage rotatif (13) à l'extrémité ouverte de l'enveloppe de réacteur (1), et le tube (5) est fixé au milieu, relativement à la section transversale du réacteur.

7. Réacteur catalytique selon la revendication 6,
caractérisé en ce que la bague de maintien (3) est réalisée sous forme d'un couvercle intermédiaire pouvant être introduit sous le couvercle de réacteur (11) et présentant, dans la zone entre le tube (5) fixé dans l'état monté et l'enveloppe de réacteur (1), des ouvertures de passage (12), par l'intermédiaire desquelles le réacteur peut être rempli du catalyseur (8), avant la mise en place du couvercle de réacteur (11).

8. Réacteur catalytique selon l'une ou plusieurs des revendications précédentes,
caractérisé en ce qu'un élément de chauffage (14) à résistance est agencé sur le dispositif de maintien de plaque de rebond, et les liaisons électriques correspondantes sont sorties du réacteur, dans la zone du tube (5).

9. Réacteur catalytique selon la revendication 8,
caractérisé en ce que l'élément de chauffage (14) est agencé dans un support (15) qui est réalisé en forme de bague, et le dispositif (7) de maintien de plaque de rebond peut être relié à celui-ci, en l'entourant en forme de bague.

10. Réacteur catalytique selon la revendication 9,
caractérisé en ce qu'un capteur de température (16) est agencé entre le dispositif (7) de maintien de plaque de rebond et le support (15).
